# FASCICULE DE BREVET EUROPEEN

(11) **EP 1 298 048 B1**
(45) Date de publication et mention de la délivrance du brevet: **21.12.2005**
(21) Numéro de dépôt: 02292363.5
(22) Date de dépôt: 26.09.2002
(51) Int. Cl.: B62K 21/06

(54) **Jeu de direction de bicyclette, et adapteur pour un tel jeu de direction**
Fahrradlenkkopf und Adapter für einen solchen Lenkkopf
Bicycle steering head and adapter for such a steering head

(30) Priorité: 26.09.2001 FR 0112355
(43) Date de publication de la demande: 02.04.2003
(73) Titulaire: Look Cycle International, 58000 Nevers (FR)
(72) Inventeur: Couturet, Jean-Pierre, 58000 Nevers (FR)
(74) Mandataire: Boutin, Antoine

(56) Documents cités:
- DE-U- 29 905 860
- GB-A- 2 328 913

## Description

La présente invention concerne un jeu de direction de bicyclette, ainsi qu'un adaptateur pour un tel jeu de direction de bicyclette.

Le document GB-A-2 328 913 décrit un jeu de direction de bicyclette selon le préambule de la revendication 1 ainsi qu'un adaptateur pour un tel jeu de direction de bicyclette selon le préambule de la revendication 7.

Le jeu de direction concerné par l'invention est un jeu de direction comprenant des roulements à l'intérieur de la douille de direction de la bicyclette.

On connaît de tels jeux de direction qui comportent un roulement inférieur et un roulement supérieur aptes à guider en rotation un tube pivot logé dans la douille de direction d'un cadre de cycle. Les roulements sont logés dans un logement respectif délimité par un épaulement usiné à l'intérieur de la douille de direction.

Une potence portant le guidon est fixée à la partie supérieure du tube pivot et sert également à bloquer l'ensemble axialement lorsque tous les éléments sont montés sur la douille de direction. A l'extrémité opposée du tube pivot, une tête de fourche est fixée en rotation sur le tube pivot et sert de moyen de butée axial de l'ensemble.

Cette construction est relativement rigide tout en permettant la manoeuvre aisée du guidon lors du pédalage. Cependant, l'intérieur de la douille de direction est spécialement usiné afin d'adapter les logements à des roulements ayant une hauteur prédéterminée et de cette manière, le choix de roulement reste imposé par le constructeur. Il est donc impossible de remplacer les roulements par un autre modèle de roulement présentant une hauteur différente.

D'autre part, rien n'est prévu pour remédier à la détérioration ou l'usure des portées usinées dans la douille de direction.

Le but de l'invention est de remédier à ces inconvénients en proposant un jeu de direction comportant un élément permettant de monter d'autres roulements que ceux initialement prévus par le constructeur, et qui permet en plus de remédier facilement à l'usure de certaines pièces du jeu de direction.

L'objet de l'invention est un jeu de direction de bicyclette, comportant un roulement inférieur et un roulement supérieur destinés à guider en rotation un tube pivot, chaque roulement étant apte à être reçu dans un logement annulaire respectif aménagé à l'intérieur d'une douille de direction faisant partie d'un cadre de bicyclette, chaque roulement étant associé à un anneau respectif reposant sur une portée de celui-ci, et une bague d'extrémité apte à entourer le tube pivot au-dessus de la douille de direction, caractérisé par le fait qu'au moins un des roulements est en outre associé à un adaptateur sous forme d'une bague apte à être placée entre le roulement et le fond du logement annulaire afin de régler la hauteur du logement de manière à adapter celle-ci à des roulements présentant des hauteurs différentes.

Selon d'autres caractéristiques de l'invention :
- l'adaptateur présente d'un côté une première portée de forme complémentaire d'une surface de portée sur le roulement, et de l'autre côté une deuxième surface de portée de forme complémentaire de la face du fond du logement dans lequel l'adaptateur est susceptible d'être placé ;
- l'adaptateur comporte sur sa périphérie une collerette d'extension axiale présentant ladite première surface de portée pour le roulement ;
- les formes complémentaires comportent une surface conique ;
- l'adaptateur est fendu ;
- un adaptateur est associé à chaque roulement.

L'invention a également pour objet un adaptateur pour jeu de direction de bicyclette, caractérisé par le fait qu'il est constitué par une bague apte à être placée au fond d'un logement annulaire à l'intérieur d'une douille de direction, afin de régler la hauteur du logement par rapport à des roulements présentant des hauteurs différentes.

Selon d'autres caractéristiques de l'invention :
- l'adaptateur comporte sur sa périphérie une collerette d'extension axiale présentant une surface de portée pour un roulement ;
- l'adaptateur présente d'un côté une première surface de portée de forme complémentaire d'une surface de portée sur le roulement, et de l'autre côté une deuxième surface de portée de forme complémentaire de la face du fond du logement dans lequel l'adaptateur est susceptible d'être placé ;
- les première et deuxième surfaces de portées de l'adaptateur sont coniques ;
- la bague formant l'adaptateur est fendue.

D'autres caractéristiques et avantages de l'invention ressortiront de la description qui va suivre de deux modes de réalisation non limitatifs de l'invention, en référence aux figures annexées dans lesquelles :
- les figures 1a et 1b sont des vues schématiques en perspective respectivement en coupe montrant les éléments de la partie supérieure du jeu de direction, dans la figure 1a sous forme d'une vue éclatée et dans la figure 1b sous forme d'une vue en coupe longitudinale des éléments assemblés ;
- les figures 2a et 2b sont des vues schématiques en perspective respectivement en coupe montrant les éléments de la partie inférieure du jeu de direction, dans la figure 2a sous forme d'une vue éclatée et dans la figure 2b sous forme d'une vue en coupe longitudinale des éléments assemblés ;
- la figure 3 est une vue de dessous de l'élément supérieur des figures 2a et 2b, cet élément constituant l'adaptateur selon l'invention ;
- la figure 4 est une vue d'ensemble en coupe partielle longitudinale d'une douille de direction sur laquelle un jeu de direction selon l'invention est monté.

Dans les figures, les éléments identiques ou équivalents porteront les mêmes signes de référence.

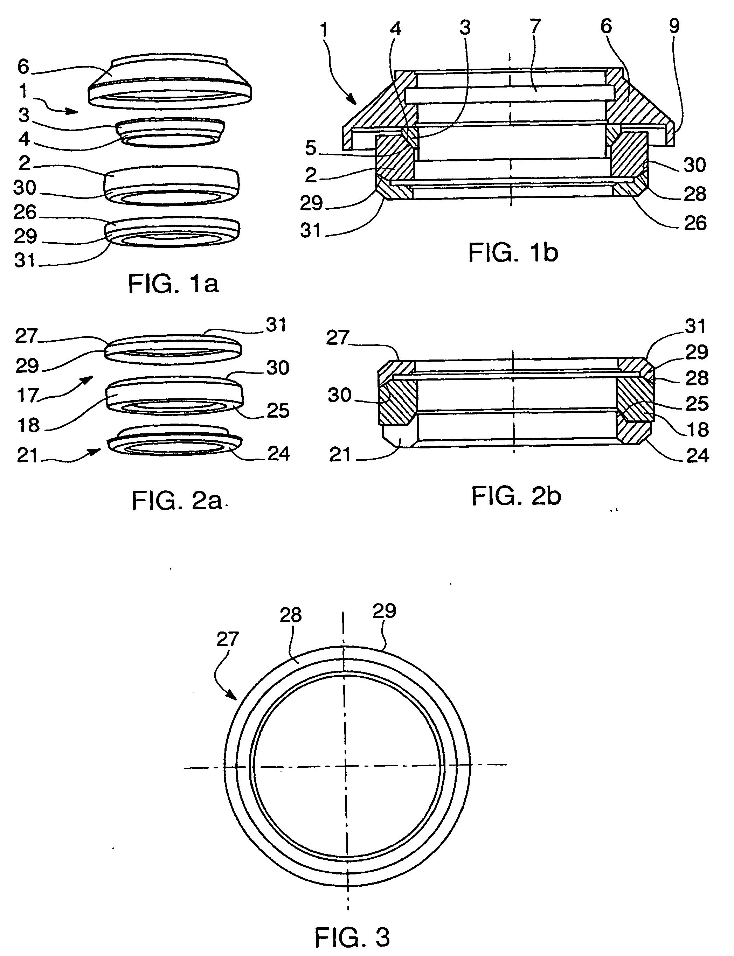

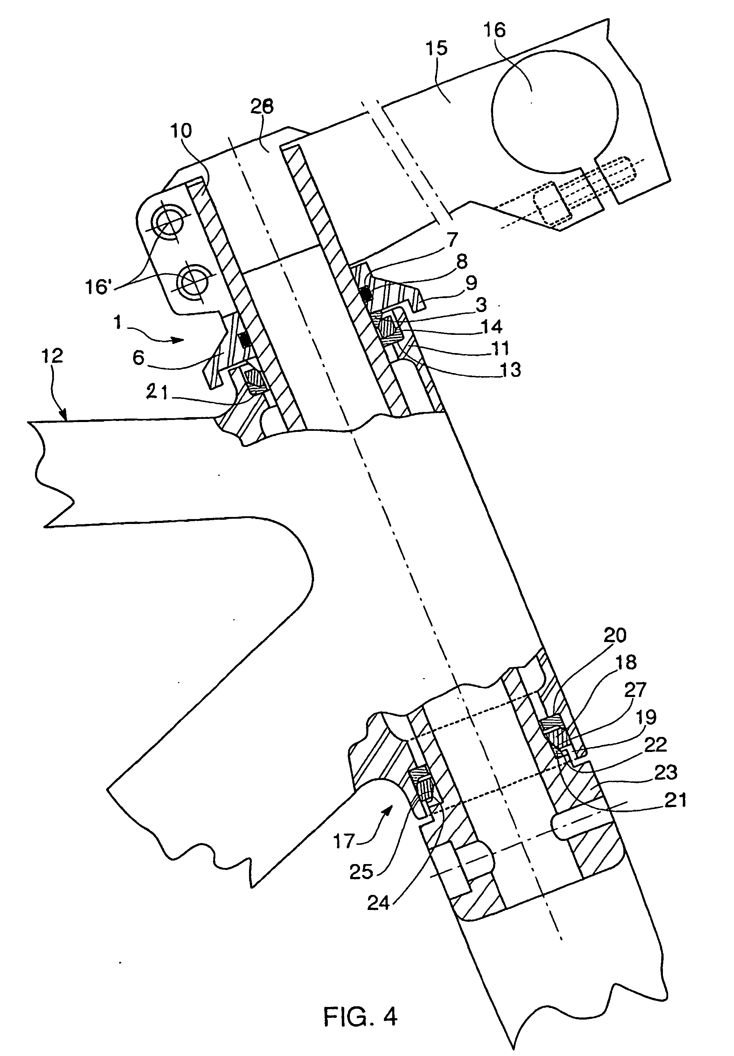

Les figures 1a, 1b et 4 montrent les éléments de la partie supérieure 1 d'un jeu de direction selon l'invention. Cette partie supérieure comporte un roulement dit supérieur 2 qui de préférence est un roulement à galets illustré très schématiquement sur les figures.

Ce roulement 2 coopère avec une bague de serrage 3 pourvu d'une surface conique 4 en appui contre une surface conique 5 formant une portée sur le bord supérieur intérieur du roulement 2.

Une bague d'extrémité 6 à surface extérieure globalement conique coiffe la bague de serrage 3 en la sollicitant vers le roulement 2. Sur sa face intérieure, la bague d'extrémité 6 comporte une gorge 7 définissant un logement pour un joint torique 8 (voir figure 4). Cette bague d'extrémité est par ailleurs pourvue d'une jupe de protection 9.

La figure 4 montre les éléments 2, 3 et 6 après leur assemblage sur un tube pivot de fourche 10 de manière à relier celui-ci à une douille de direction 11 faisant partie d'un cadre de cycle 12.

Pour recevoir le roulement 2, la douille de direction 11 est à son extrémité supérieure pourvue d'un épaulement 12 définissant, avec la paroi interne de la douille de direction, un logement annulaire 14. Le roulement 2 est placé dans ce logement, autour du tube pivot 10 pour lequel il constitue un organe de guidage en rotation.

Le roulement 2 est monté avec un léger jeu autour de l'extrémité supérieure du tube pivot 10, et présente également un léger jeu côté extérieur par rapport au logement 14 à l'intérieur de la douille de direction 11, de façon à pouvoir tourner librement dans celle-ci sans toucher les parois.

La liaison entre le roulement 2 et le tube pivot 10 est assurée par la bague de serrage 3 serrée entre le roulement et la face inférieure de la bague d'extrémité 6 à travers laquelle le tube pivot fait saillie pour offrir une surface de fixation à une potence 15 pourvue d'un trou traversant 16 recevant le guidon (non représenté) du cycle. La potence 15 est fixée au tube pivot 10 à la manière d'un collier à l'aide de vis de fixation 16'.

Les figures 2a, 2b et 4 montrent les éléments de la partie inférieure 17 du jeu de direction selon l'invention. Cette partie inférieure 17 est symétrique par rapport à la partie supérieure 1 et comporte des éléments analogues.

Ainsi, la partie inférieure 17 du jeu de direction comporte un roulement dit inférieur 18 reçu dans un logement 19 défini la paroi interne de la douille de direction 10 et par un épaulement 20 effectué dans cette paroi.

La liaison entre le roulement 18 et le tube pivot est assuré par un anneau 21 monté serré contre une portée constituée par un épaulement 22 sur une tête de fourche 23 formée à l'extrémité inférieure du tube pivot et reliée à la fourche (non représentée) du cycle.

L'anneau 21 ou le cône de fourche comporte une portée conique 24 contre lequel repose une porte conique correspondant 25 du roulement inférieur 18. Il assure le centrage du roulement inférieur 18, grâce à la partie conique 24. Cet anneau est dans l'exemple illustré sur la figure 4 fendu.

Tout comme dans la partie supérieure 1 du jeu de direction, le roulement inférieur 18 est monté avec un léger jeu autour de l'extrémité inférieure du tube pivot 10, et présente également un léger jeu côté extérieur par rapport au logement à l'intérieur de la douille de direction 11, de façon à pouvoir tourner librement.

Dans l'exemple illustré sur la figure 4, le maintien dans le sens axial de tout l'ensemble des organes de direction est réalisé par les moyens situés au-dessus du jeu de direction, qui sont dans l'ordre : la potence 15, éventuellement une ou plusieurs bagues intermédiaires formant entretoise, et finalement un bouchon supérieur 28 monté à la partie supérieure du tube pivot 10 de manière à fermer celui-ci vers le haut.

Lors du serrage de l'ensemble, la bague de serrage 3 est logée dans la partie supérieure conique du roulement supérieur 2 et assure le guidage de la partie supérieure du tube pivot de fourche 10. Le rattrapage des jeux entre ces éléments est assuré par la poussée verticale, dirigée vers le bas, transmise par l'intermédiaire de la bague d'extrémité 6.

Selon l'invention, au moins un des roulements est associé à un adaptateur sous forme d'une bague apte à être placée entre le roulement 2, 18 et le fond du logement annulaire correspondant 14, 19. Son diamètre intérieur est plus grand que celui du tube pivot 10, mais plus petit que celui du passage dans la douille de direction à cet endroit.

Dans le mode de réalisation illustré sur les figures, le jeu de direction comporte deux tels adaptateurs, 26 et 27, dont l'un 26 est associé au roulement supérieur 2, et l'autre 27 est associé au roulement inférieur.

Chaque adaptateur 26, 27 comporte une première surface de portée 28 contre laquelle le roulement 2, 3 prend appui. Cette première surface de portée 28 est dans l'exemple illustré disposée sur une collerette 29 d'extension axiale sur la périphérie de l'adaptateur.

La première surface de portée 28 de chaque adaptateur 26, 27 est dans le mode de réalisation représenté sur les figures conique afin de coopérer avec une surface de portée 30 de forme complémentaire sur le roulement correspondant 2, 18. Chaque adaptateur 26, 27 présente ainsi d'un côté une première surface de portée 28, et de l'autre côté une deuxième surface de portée 31 de forme complémentaire de la face du fond du logement 14, 19 dans lequel l'adaptateur est placé.

De préférence, la bague formant adaptateur est fendue pour mieux l'adapter au diamètre interne du logement qui est susceptible de varier légèrement.

L'adaptateur assure en outre le positionnement du roulement par rapport à l'axe de la douille de direction.

Ainsi est obtenu un jeu de direction comprenant un adaptateur permettant de régler la hauteur du logement du roulement afin d'adapter le logement à des roulements présentant des hauteurs différentes, ce qui donne la possibilité de substituer le roulement par un roulement autre que celui initialement choisi par le constructeur.

Si les portées sont usées, il est également facile de remplacer les adaptateurs afin de compenser la réduction en hauteur du logement que cette usure entraîne. Egalement en cas d'endommagement sur l'adaptateur lui-même, il peut facilement être remplacé.

Bien entendu, l'invention n'est pas limitée aux exemples illustrés et décrits, mais comprend également toutes les variantes envisageables par l'homme du métier. Ainsi, il est bien entendu possible d'utiliser un seul adaptateur dans un jeu de direction si la réduction apportée à la hauteur d'un des logements de roulements est suffisante.

## Revendications

1. Jeu de direction de bicyclette, comportant un roulement supérieur (2) et un roulement inférieur (18) destinés à guider en rotation un tube pivot, chaque roulement (2, 18) étant apte à être reçu dans un logement annulaire respectif (14, 19) aménagé à l'intérieur d'une douille de direction (11) faisant partie d'un cadre (12) de bicyclette, chaque roulement (2, 18) étant associé à un anneau respectif (3, 21) reposant sur une portée de celui-ci, et une bague d'extrémité (6) apte à entourer le tube pivot (10) au-dessus de la douille de direction (11), **caractérisé par le fait qu'**au moins un des roulements (2, 18) est associé à un adaptateur (26, 27) sous forme d'une bague apte à être placée entre le roulement (2, 18) et le fond du logement annulaire (14, 19) afin de régler la hauteur du logement de manière à adapter celle-ci à des roulements (2, 18) présentant des hauteurs différentes.

2. Jeu de direction de bicyclette selon la revendication 1, **caractérisé par le fait que** l'adaptateur (26, 27) présente d'un côté une première portée (28) de forme complémentaire d'une surface de portée (30) sur le roulement (2, 18), et de l'autre côté une deuxième surface de portée (31) de forme complémentaire de la face du fond du logement (14, 19) dans lequel l'adaptateur (26, 27) est susceptible d'être placé.

3. Jeu de direction de bicyclette selon la revendication 1 ou 2, **caractérisé par le fait que** l'adaptateur (26, 27) comporte sur sa périphérie une collerette d'extension axiale (29) présentant ladite première surface de portée (28) pour le roulement (2, 18).

4. Jeu de direction de bicyclette selon la revendication 2 ou 3, **caractérisé par le fait que** les formes complémentaires (28, 30, 31) comportent une surface conique.

5. Jeu de direction de bicyclette selon l'une quelconque des revendications précédentes, **caractérisé par le fait que** l'adaptateur (26, 27) est fendu.

6. Jeu de direction de bicyclette selon l'une quelconque des revendications 1 à 5, **caractérisé par le fait qu'**un adaptateur (26, 27) est associé à chaque roulement (2, 18).

7. Adaptateur pour jeu de direction de bicyclette, **caractérisé par le fait qu'**il est constitué par une bague (26, 27) apte à être placée au fond d'un logement annulaire (14, 19) à l'intérieur d'une douille de direction (11), afin de régler la hauteur du logement (14, 19) par rapport à des roulements (2, 18) présentant des hauteurs différentes.

8. Adaptateur pour jeu de direction de bicyclette selon la revendication 7, **caractérisé par le fait qu'**il comporte sur sa périphérie une collerette d'extension axiale (29) présentant une surface de portée (28) pour un roulement (2, 18).

9. Adaptateur pour jeu de direction de bicyclette selon la revendication 7 ou 8, **caractérisé par le fait qu'**il présente d'un côté une première surface de portée (28) de forme complémentaire d'une surface de portée (30) sur le roulement (2, 18), et de l'autre côté une deuxième surface de portée (31) de forme complémentaire de la face du fond du logement (14, 19) dans lequel l'adaptateur (26, 27) est susceptible d'être placé.

10. Adaptateur pour jeu de direction de bicyclette selon la revendication 9, **caractérisé par le fait que** les première et deuxième surfaces de portées (28, 31) de l'adaptateur (26, 27) sont coniques.

11. Adaptateur pour jeu de direction de bicyclette selon l'une quelconque des revendications 7 à 9, **caractérisé par le fait que** la bague formant adaptateur (26, 27) est fendue.

## Patentansprüche

1. Fahrradlenkkopf, umfassend: ein oberes Wälzlager (2) und ein unteres Wälzlager (18), welche zur Rotations-Führung eines Lenk-Rohrs vorgesehen sind, wobei jedes Wälzlager (2, 18) so ausgebildet ist, dass es in einer zugehörigen ringförmigen Aufnahme (14, 19) aufnehmbar ist, welche an der Innenseite einer Lenk-Hülse (11) ergänzt ist, welche einen Teil eines Fahrrad-Rahmens (12) bildet, wobei jedes Wälzlager (2, 18) einem zugehörigen Ring (3, 21) zugeordnet ist, welcher auf einer Trage-Vorrichtung desselben ruht, und eine End-Ring-Vorrichtung (6), welche so ausgebildet ist, dass sie oberhalb der Lenk-Hülse (11) das Schwenk-Rohr (10) zu umgibt, **dadurch gekennzeichnet, dass** wenigstens eines der Wälzlager (2, 18) einem Adapter (26, 27) in Form eine Ring-Vorrichtung zugeordnet ist, welche so ausgebildet ist, dass sie zwischen dem Wälzlager (2, 18) und dem Boden der ringförmigen Aufnahme (14, 19) anordenbar ist, um die Höhe der Aufnahme einzustellen, um diese an Wälzlager (2, 18), welche unterschiedliche Höhen aufweisen, anzupassen.

2. Fahrradlenkkopf gemäß Anspruch 1, **dadurch gekennzeichnet, dass** der Adapter (26, 27) an einer Seite eine erste Trage-Vorrichtung (28) in einer zu einer Trage-Oberfläche (30) an dem Wälzlager (2, 18) komplementären Form aufweist, und an der anderen Seite eine zweite Trage-Oberfläche (31) in einer zu der Boden-Fläche der Aufnahme (14, 19), in welcher der Adapter (26, 27) angeordnet sein kann, komplementären Form aufweist.

3. Fahrradlenkkopf gemäß Anspruch 1 oder 2, **dadurch gekennzeichnet, dass** der Adapter (26, 27) an seinem Umfang einen Kragenring mit axialer Erstreckung (29) umfasst, welcher die erste Trage-Oberfläche (28) für das Wälzlager (2, 18) aufweist.

4. Fahrradlenkkopf gemäß Anspruch 2 oder 3, **dadurch gekennzeichnet, dass** die komplementären Formen (28, 30, 31) eine konische Fläche aufweisen.

5. Fahrradlenkkopf gemäß einem der vorhergehenden Ansprüche, **dadurch gekennzeichnet, dass** der Adapter (26, 27) geschlitzt ist.

6. Fahrradlenkkopf gemäß einem der Ansprüche 1 bis 5, **dadurch gekennzeichnet, dass** jedem Wälzlager (2, 18) ein Adapter (26, 27) zugeordnet ist.

7. Adapter für einen Fahrradlenkkopf, **dadurch gekennzeichnet, dass** er von einer Ring-Vorrichtung (26, 27) gebildet wird, welche so ausgebildet ist, dass sie am Boden einer ringförmigen Aufnahme (14, 19) im Innern einer Lenk-Hülse (11) angeordenbar ist, um die Höhe der Aufnahme (14, 19) in Bezug zu Wälzlager (2, 18) einzustellen, welche unterschiedliche Höhen aufweisen.

8. Adapter für einen Fahrradlenkkopf gemäß Anspruch 7, **dadurch gekennzeichnet, dass** er an seinem Umfang einen Kragenring mit axialer Erstreckung (29) aufweist, welcher eine Trage-Oberfläche (28) für ein Wälzlager (2, 28) aufweist.

9. Adapter für einen Fahrradlenkkopf gemäß Anspruch 7 oder 8, **dadurch gekennzeichnet, dass** er an einer Seite eine erste Trage-Oberfläche (28) aufweist, welche eine zu einer Trage-Oberfläche (30) an dem Wälzlager (2, 28) komplementäre Form aufweist, und an der anderen Seite eine zweite Trage-Oberfläche (31) aufweist, welche eine zu der Fläche des Bodens der Aufnahme (14, 19), in welcher der Adapter (26, 27) angeordnet werden kann, komplementäre Form aufweist.

10. Adapter für einen Fahrradlenkkopf gemäß Anspruch 9, **dadurch gekennzeichnet, dass** die erste und die zweite Trage-Oberfläche (28, 31) des Adapters (26, 27) konisch sind.

11. Adapter für einen Fahrradlenkkopf gemäß einem der Ansprüche 7 bis 9, **dadurch gekennzeichnet, dass** die Ring-Vorrichtung, welche den Adapter (26, 27) bildet, geschlitzt ist.

## Claims

1. Bicycle steering head, comprising an upper roller bearing (2) and a lower roller bearing (18) for guiding a pivot tube in rotation, each roller bearing (2, 18) being designed to be mounted in a respective annular housing (14, 19) provided on the inside of a steering sleeve (11) forming part of a bicycle frame (12), each roller bearing (2, 18) being associated with a respective ring (3, 21) resting on a support surface thereof, and an end ring (6) designed to surround the pivot tube (10) above the steering sleeve (11), **characterised in that** at least one of the roller bearings (2, 18) is associated with an adapter (26, 27) in the form of a ring able to be positioned between the roller bearing (2, 18) and the bottom of the annular housing (14, 19) in order to adjust the height of the housing so as to adapt the latter to roller bearings (2, 18) having different heights.

2. Bicycle steering head according to claim 1, **characterised in that** the adapter (26, 27) has on one side a first support surface (28) with a complementary shape to that of a support surface (30) on the roller bearing (2, 18), and on the other side a second support surface (31) with a complementary shape to that of the surface of the bottom of the housing (14, 19) in which the adapter (26, 27) is designed to be placed.

3. Bicycle steering head according to claim 1 or 2, **characterised in that** the adapter (26, 27) comprises on its periphery an axial extension collar (29) comprising said first support surface (28) for the roller bearing (2, 18).

4. Bicycle steering head according to claim 2 or 3, **characterised in that** the complementary shapes (28, 30, 31) have conical surfaces.

5. Bicycle steering head according to any one of the preceding claims, **characterised in that** the adapter (26, 27) is split.

6. Bicycle steering head according to any one of claims 1 to 5, **characterised in that** an adapter (26, 27) is associated with each roller bearing (2, 18).

7. Adapter for a bicycle steering head, **characterised in that** it comprises a ring (26, 27) designed to be positioned at the bottom of an annular housing (14, 19) on the inside of a steering sleeve (11), in order to adjust the height of the housing (14, 19) in relation to roller bearings (2, 18) having different heights.

8. Adapter for a bicycle steering head according to claim 7, **characterised in that** it comprises on its periphery an axial extension collar (29) having a support surface (28) for a roller bearing (2, 18).

9. Adapter for a bicycle steering head according to claim 7 or 8, **characterised in that** it has on one side a first support surface (28) with a complementary shape to that of a support surface (30) on the roller bearing (2, 18), and on the other side a second support surface (31) with a complementary shape to that of the surface of the bottom of the housing (14, 19) in which the adapter (26, 27) is designed to be placed.

10. Adapter for a bicycle steering head according to claim 9, **characterised in that** the first and second support surfaces (28, 31) of the adapter (26, 27) are conical.

11. Adapter for a bicycle steering head according to any one of claims 7 to 9, **characterised in that** the ring forming the adapter (26, 27) is split.
